# EUROPÄISCHE PATENTSCHRIFT

(11) **EP 0 178 561 B1**
(45) Veröffentlichungstag und Bekanntmachung des Hinweises auf die Patenterteilung: **31.08.1994**
(21) Anmeldenummer: 85112660.7
(22) Anmeldetag: 07.10.1985
(51) Int. Cl.: C08K 9/00, H01B 1/22, C08K 7/02

(54) **Gefülltes Kunststoff-Granulat**
Resin granules containing fillers
Granules de résine contenant des charges

(30) Priorität: 17.10.1984 DE 3437947
(43) Veröffentlichungstag der Anmeldung: 23.04.1986
(73) Patentinhaber: BAYER AG, 51368 Leverkusen (DE)
(72) Erfinder: Depcik, Hans Werner, Dipl.-Ing., D-4000 Düsseldorf 22 (DE)

(56) Entgegenhaltungen:
- WO-A-84/00554

## Beschreibung

Die Erfindung betrifft ein gefülltes Kunststoffgranulat zur Weiterverarbeitung in Maschinen mit Plastifiziereinrichtungen, bestehend aus einem oder mehreren Kunststoffen in Verbindung mit eine verbesserte Festigkeit und/oder eine verbesserte Abschirmwirkung gegen elektrische, magnetische und elektromagnetische Störfelder aufweisenden Einlagen.

Viele Kunststoffteile werden mit Einlagen versehen, um die Festigkeit zu erhöhen und/oder bessere Abschirmungen gegen elektrische, elektromagnetische bzw. magnetische Störfelder sowie Störstrahlung zu erzielen.

Bekannt ist es, Kunststoffteile nachträglich durch Galvanisierung, Vakuummetallisierung, Metallflammspritzen oder Lackierung mit elektrisch leitenden Schichten zu versehen.

Die Aufbringung solcher Schichten erfordert zusätzlich komplizierte Arbeitsgänge, wobei die Oberfläche wegen ihrer Empfindlichkeit leicht verletzbar ist, wodurch die Wirksamkeit der Abschirmung stark zurückgeht.

Weiter werden Füllstoffe wie Ruß, Graphit, Aluflakes, Metallfasern und Kohlenstoffasern dem Kunststoffgranulat zugesetzt und dann nach der Plastifizierung in Formteile gespritzt. Die Maschinen-Beschickung erfolgt meist in Form eines Gemisches aus Kunststoffgranulat und Füllstoffen.

Da beim Plastifizieren im allgemeinen große Scherkräfte auftreten, findet eine unerwünschte Zerkleinerung statt. Um trotzdem den gewünschten Effekt hinsichtlich Festigkeit und/oder Abschirmung zu erzielen, ist es erforderlich, große Füllmengen (bis 45 Gew.-%) zuzusetzen, was wiederum sehr teuer ist und das Kunststoffteil unnötig schwer macht, sowie bei diesen Mengen die Festigkeit reduziert.

Aufgabe der Erfindung ist es ein Granulat zu finden, aus welchem Kunststoffteile mit langen Einlagen hergestellt werden können, wobei trotz geringem Materialanteil an Einlagen durch gute Verteilung und Verbindung der Einlagen untereinander eine verbesserte Festigkeit und/oder eine verbesserte Abschirmwirkung über einen breiten Frequenzbereich, insbesondere im tiefen Bereich, erzielt werden kann.

Die Aufgabe wird erfindungsgemäß dadurch gelöst, daß diese Einlagen eine räumlich komprimierte Form, z.B. durch Falten oder Wickeln, aufweisen und in dieser Form durch ein Adhäsionsmittel fixiert sind, welches einen solchen Schmelzpunkt besitzt, daß beim Plastifizieren des Kunststoffes die Haftwirkung dieses Adhäsionsmittels erhalten bleibt und erst bei höherer Temperatur verloren geht, und daß sich danach die Einlagen auf mindestens das 1,2-fache der größten Längenausdehnung des Granulats frei ausstrecken können.

Dadurch, daß das Adhäsionsmittel seine Haftwirkung erst bei hoher Temperatur verliert, können sich die Einlagen erst kurz vor dem eigentlichen Spritzvorgang ausstrecken. Durch diese Maßnahme wird vermieden, daß in der Anfangsphase schon frei vorragende Teile einer Scherung und damit Zerstörung unterworfen werden. Gleichzeitig kann auch eine Ummantelung als Schutz vorgenommen werden.

Aus WO 84/00554 ist es bekannt, Mikrofasern in die Formmasse einzuarbeiten, bevor andere Verstärkungskomponenten, z.B. Makrofasern, der Formmasse zugeführt werden.

Auch aus DE 2 423 852 ist es bekannt, faserförmige Füllstoffe in Spiralform, gewellter Form oder gekräuselter Form in der Formmasse einzuarbeiten.

In beiden Fällen soll aber die vorgegebene Form des Fasermaterials erhalten bleiben, um eine Orientierung während des Gießens zu vermeiden.

Durch Konzentration jeder Einlage auf engen Raum ist es möglich, große längliche Einlagen im Granulat selbst oder direkt auf seiner Oberfläche so anzuordnen, daß sie während des Plastifizierungsprozesses gegen Zerkleinerung weitgehend geschützt sind. Bevorzugt werden Einlagen eingesetzt, deren Längenausdehnung in gestrecktem Zustand um das 2-fache, besonders bevorzugt um das 3-fache größer ist als die größte innerräumliche Abmessung (Entfernung von Außenkante zu Außenkante) des Kunststoffgranulats ist.

Nachdem aber die Masse beweglich und deshalb nicht mehr abrasiv ist, können sich die Einlagen strecken und miteinander vernetzen, wodurch die Qualität des fertigen Teils in festigkeitsmäßiger Hinsicht und in Bezug auf einen evtl. Abschirmeffekt wesentlich verbessert wird.

Die Einlagen können auch elektrisch leitfähig sein.

Durch elektrisch leitende Einlagen mit einer Längenausdehnung größer als 7 mm, insbesondere größer als 30 mm, kann eine elektromagnetische Abschirmung in den Frequenzbereichen von mehreren GHz bis herunter zu 30 MHz erzielt werden, wodurch insbesondere der Problembereich unterhalb 300 MHz gut erfaßt wird, wobei der Anteil der zugesetzten Einlagen 3-40 Gew.-%, vorzugsweise 6-20 Gew.-%, beträgt.

Durch die Komprimierung in Form von spiralförmigen oder zylinderartigen Wickeln, die im allgemeinen mittig im Granulat bzw. achssymmetrisch im zylinderartigen Granulat angeordnet sind, ist es möglich, beispielsweise Metalldrähte unterzubringen, die nach der Abwicklung eine Länge des 2-, 3-, 10- und bis zu mehr als dem 100-fachen der Länge des zylindrischen Kunststoffgranulats besitzen.

Das Komprimieren durch Falten ist ein mechanischer, einfacher, preiswerter Vorgang, der unmittelbar vor dem Einbau in das Granulat erfolgen kann, wobei durch Einfach-Faltung kleine und durch Mehrfach-Faltung große Längen zu erzielen sind.

Als Kunststoffe sind alle Thermoplaste und andere Materialien geeignet, welche als Granulat zum Zwecke der Formgebung in eine Phase mit größerer Beweglichkeit der Moleküle überführt werden können.

Als Verstärkungen können anorganische und organische Filamente, galvanisierte Textilfäden, metallische Drähte und Flakes eingesetzt werden.

Die maximale Längenausdehnung sollte 7 - 6000 mm, insbesondere 10 - 80 mm bei einem Durchmesser zwischen 4-100 µm, insbesondere 30 - 60 µm, betragen. Das Material kann weich oder federnd sein, wobei im letzteren Falle die Rückstellkräfte das Material zur Streckung veranlassen. Es ist auch denkbar, Folienbänder, Gewebe und Netzwerke in der vorbeschriebenen Form zu komprimieren.

Als Werkstoffe sind insbesondere magnetische, hochpermeable amorphe Metalle geeignet, die beispielsweise eine günstige magnetische Abschirmung (20dB) im Frequenzbereich < 30 MHz bringen.

Es ist vorteilhaft, die Einlagen mit einem Haftvermittler zu versehen.

## Patentansprüche

1. Gefülltes Kunststoffgranulat zur Weiterverarbeitung in Maschinen mit Plastifiziereinrichtungen, bestehend aus einem oder mehreren Kunststoffen in Verbindung mit einer verbesserten Festigkeit und/oder einer verbesserten Abschirmwirkung gegen elektrische, magnetische und elektromagnetische Störfelder aufweisenden Einlagen, dadurch gekennzeichnet, daß diese Einlagen eine räumlich komprimierte Form, z.B. durch Falten oder Wickeln, aufweisen und in dieser Form durch ein Adhäsionsmittel fixiert sind, welches einen solchen Schmelzpunkt besitzt, daß beim Plastifizieren des Kunststoffes die Haftwirkung dieses Adhäsionsmittels erhalten bleibt und erst bei höherer Temperatur verloren geht und daß sich danach die Einlagen auf mindestens das 1,2-fache der größten Längenausdehnung des Granulates frei ausstrecken können.

## Claims

1. Filled plastic granules for further processing in machines with plasticizing systems, consisting of one or more plastics in conjunction with inserts having improved strength and/or an improved shielding effect against electrical, magnetic and electromagnetic interference fields, characterized in that the inserts have a three-dimensionally compressed form, for example by folding or winding, and are fixed in this form by an adhesive which has such a melting point that, on plasticization of the plastic, the adhesive retains its adhesive effect and only loses its adhesive effect at a higher temperature and in that the inserts can then expand freely to at least 1.2 times the maximum length of the granules.

## Revendications

1. Granulé de matière plastique chargé, destiné au traitement dans des machines avec des unités de plastification, constitué d'une ou plusieurs matières plastiques en relation avec des inserts qui présentent une solidité améliorée et/ou un effet amélioré d'écran contre des champs parasites électriques, magnétiques, ou électromagnétiques, caractérisé en ce que lesdits inserts présentent une forme comprimée dans l'espace, par exemple par pliage ou par bobinage, et sont fixés sous cette forme au moyen d'un produit adhésif qui possède un point de fusion tel que lors de la plastification de la matière plastique l'effet d'adhésion de ce produit adhésif demeure préservé et ne disparaît que pour des températures plus élevées, et en ce que les inserts peuvent ensuite s'étirer librement jusqu'à au moins 1,2 fois l'extension longitudinale maximum du granulé.
